# EUROPEAN PATENT APPLICATION

(11) **EP 2 341 729 A1**
(43) Date of publication of application: **06.07.2011**
(21) Application number: 10305002.7
(22) Date of filing: 04.01.2010
(51) Int. Cl.: H04W 36/00

(54) **Mobility management in a multi-access wireless or mobile communication system**

(71) Applicant: Alcatel Lucent, 75008 Paris (FR)
(72) Inventor: Mongazon-Cazavet, Bruno, 91620, NOZAY (FR); Lafragette, Jean-Luc, 91620, NOZAY (FR)
(74) Representative: El Manouni, Josiane

(57) **Abstract**

One object of the present invention is a method for mobility management in a multi-access wireless or mobile communication system supporting IP mobility services, said method comprising the steps of, at handoff of a multi-mode terminal from an access network:
- releasing an IP address allocated to said multi-mode terminal in said access network,
- keeping said multi-mode terminal attached to said access network and/or registered for said IP mobility services, when said IP address is released.

## Description

The present invention generally relates to wireless or mobile communication networks and systems.

Detailed descriptions of wireless or mobile communication networks and systems can be found in the literature, such as literature published by standardisation bodies.

The present invention more particularly relates to mobility management in a multi-access wireless or mobile communication system supporting IP mobility.

There is a need to improve mobility management in such systems, particularly at handover between access networks.

The present invention in particular addresses such needs.

These and other objects are achieved, in one aspect, in an embodiment, by a method for mobility management in a multi-access wireless or mobile communication system supporting IP mobility services, said method comprising the steps of, at handoff of a multi-mode terminal from an access network:
- releasing an IP address allocated to said multi-mode terminal in said access network,
- keeping said multi-mode terminal attached to said access network and/or registered for said IP mobility services, when said IP address is released.

These and other objects are achieved, in other aspects, by entities for performing such method, such as in particular multi-mode terminal, and network entities, such as access network entity including DHCP relay and core network entity including DHCP server.

These and other objects will become more apparent from the following description taken in conjunction with the accompanying drawings:
- figure 1 illustrates an example of system in which the present invention may be used,
- figure 2 illustrates a possible solution for mobility management, in a system such as for example the one illustrated in figure 1, having drawbacks that the present invention enables to avoid,
- figure 3 illustrates mobility management according to an embodiment of the present invention, in a system such as for example the one illustrated in figure 1.

The present invention may be explained as follows.

Forthcoming wireless IP networks highly support the concept of network localized mobility management. This concept allows existing hosts to achieve wireless IP connectivity with network assistance and without the need of severe host modification (i.e. operating system or network stack). The concept is critical since it potentially allows a huge number of existing users to benefit from new networks being put in place. A typical application of this concept can be found in PMIP (Proxy Mobile IP) protocols such as PMIPv4 and PMIPv6 whose usage is being standardized by IETF, WiMAX Forum and 3GPP/SA2. Although little protocol variants might exist, above-mentioned organizations share common mechanisms to allow wireless networks infrastructure to interact with end-users using the popular and largely deployed DHCP protocol. Common mechanisms are defined to support both nomadicity and simple mobility (handover) over single or multiple radio access technologies (RAT). A common approach includes providing proxy components in the access network to assist and manage end-users access and mobility. Such components typically include a DHCP relay and a proxy Mobile IP stack (with Foreign Agent -FA- function). The proxy components manage localized access and mobility on behalf of other network infrastructure components that manage global access and mobility (such as Home Agents -HA- and DHCP server).

In this context, a host with multiple wireless interfaces (such as a dual-radio terminals) can potentially perform a seamless inter-technology handover. Such a capability has been recently adopted by the WiMAX Forum organization to perform inter-technology handover between WiMAX networks and pre-release 8 3GPP networks. Moreover, the same kind of capability is currently studied at the WiMAX forum to achieve inter-technology handover between WiFi and WiMAX networks.

An example typically encompasses a laptop that includes a dual-mode wireless access using a built-in WiFi chipset and a WiMAX PCMCIA or USB dongle or even chipset. The example also encompasses a WiMAX-conformant network that can be configured for access through DHCP relay. As far as the WiFi is concerned, the network infrastructure encompasses a set of proxy components that include both a DHCP relay and a PMIP function. Both wireless networks are secured using EAP-TTLS protocol. The usage of a common authentication is optional. This embodiment might be a typical use-case of the WiFi-WiMAX interworking architecture as currently studied by the WiMAX Forum.

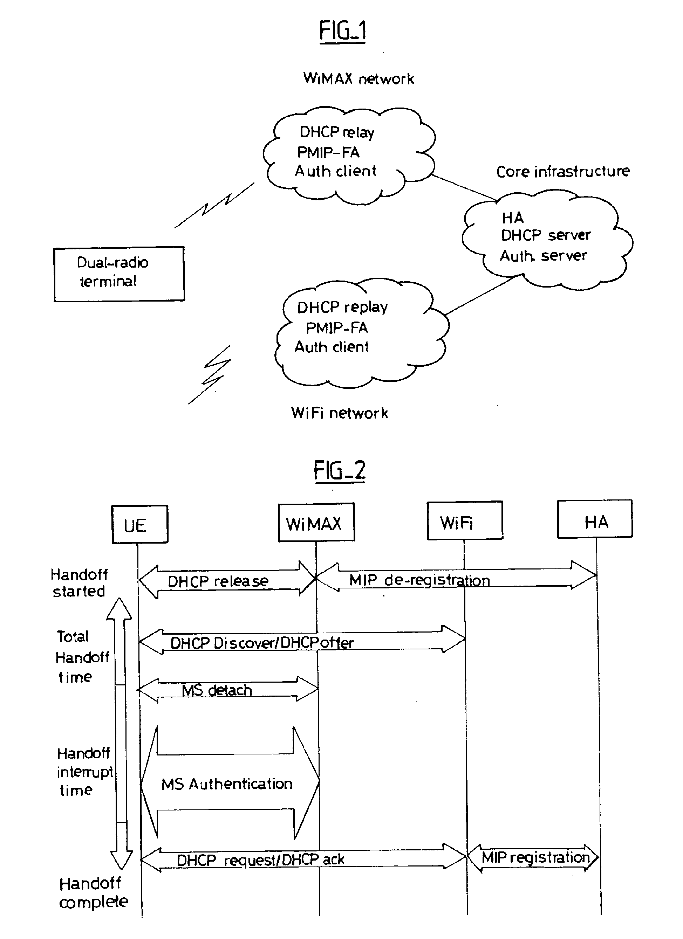

Figure 1 illustrates an example of such system comprising two access networks corresponding for example to a WiMAX access network and a WiFi access network. The present invention is however not limited to such example, in particular the present invention applies to any combination of IEEE-based and non IEEE-based access networks, or any combination of 3GPP-based and non 3GPP-based access networks.

The system illustrated in figure 1 comprises:
- a dual mode WiMAX/WiFi terminal (or User Equipment UE)
- a WiMAX access network
- a WiFi access network
- a core network.

In the example illustrated in figure 1, the system supports Proxy Mobile IP (PMIP) protocol and DHCP protocol. The present invention is however not limited to this example and could apply to other protocol examples.

The access networks illustrated in figure 1 in particular include DHCP relay, PMIP-FA, and Authentication Client.

The core network illustrated in figure 1 in particular includes DHCP Server, HA, and Authentication server.

Access to a wireless network (such as WiMAX or WiFi) using DHCP and PMIP typically involves the following tasks:
- Radio set-up
- Access Authentication
- IP address allocation

More details on these tasks tasks are given hereafter.

Radio set-up: In order for the terminal to access a wireless network, the radio part of the terminal is turned on and synchronized (tuned) to the wireless network frequency band.

Access Authentication: Because wireless is a scarce resource, its access is usually granted after preliminary identification and authentication. In nowadays wireless networks, this usually takes place using EAP protocol further conveyed to a AAA infrastructure using Radius protocol. The overall authentication process involves the exchange of several messages (generally not less than 6) between the terminal and the network infrastructure. After successful authentication, the terminal is said "attached" to the wireless network and a default bearer is available for IP address allocation.

IP address allocation: Once a terminal is "attached" to a wireless network infrastructure, it asks for allocation of an IP address. This may be achieved using the DHCP protocol. The address allocation is asked by broadcasting a DHCP Discover packet to the access network. When PMIP is used, the DHCP Discover is relayed by the DHCP Relay function in the access network toward a global DHCP server in the network infrastructure. The IP address is provided in return by the DHCP server to the terminal through the DHCP relay function in the access network. This typically involves several DHCP exchanges between the DHCP client in the terminal and the DHCP server in the infrastructure. When PMIP is used, these exchanges are relayed by the DHCP relay in the access network. In addition to relaying DHCP messages, the access network that is based on PMIP mechanisms also need to correlate DHCP IP address allocation with MIP protocol. To do so, the access network usually perform a MIP registration toward a HA in the infrastructure whenever it relays the final DHCP ack message from the server to the terminal. Once the MIP registration is granted by the infrastructure HA, a MIP registration reply is sent. At that time, both the terminal and the infrastructure are ready for IP data flow.

Dual-mode terminals that expect to perform seamless handoff between two wireless networks do perform the above-mentioned wireless network access on each network alternatively. In order for handoff to be reliable and efficient, the following terminal behavior may be expected:
- Radio set-up is performed once for each network ahead of handoff occurrences
- Access authentication is performed once for each network ahead of handoff occurrences, possibly renewed from time to time in a fast way (fast re-authentication) and outside handoff occurrences.
- Because most of terminals do not support the same IP address to be configured on multiple interfaces, the IP address of the "serving" network is released before the IP address of the "target" network is allocated

However, since the terminal behavior is not fully specified, practical implementation with current terminals and wireless networks prove to behave differently and have impacts the global handoff performance and reliability. For example, when the "serving" network (being handoff from) is of WiMAX type, the release of the IP address by the terminal leads to detach the terminal from the access network. Such a "detach" is ordered by the WiMAX access network. Because the terminal is detached but the radio is still active, the terminal attempts to perform a new authentication on the "serving" interface while IP address allocation is ongoing on the "target" network (being handoff to). The side effect of this behavior is a general slowdown of the handoff procedure. Some measurements show that such behavior lead to a 4 seconds handoff while handoff in the reverse direction (toward WiMAX) is usually measured under a second.

In other words, although handover mechanisms based on DHCP and PMIP have been described and specified, their practical implementation exhibit behaviors that should be improved in order to achieve better performance and reliability for seamless handovers.

Figure 2 illustrates a possible solution for mobility management, in a system such as for example the one illustrated in figure 1, having such drawbacks that the present invention enables to avoid.

Following steps are illustrated in figure 2, at handover from WiMAX access network to WiFi access network for example:
- DHCP release (between UE and WiMAX access network) and MIP de-registration (between WiMAX access network and HA)
- DHCP Discover/DHCP offer (between UE and WiFi access network)
- MS detach (between UE and WiMAX access network)
- MS authentication (between UE and WiMAX access network)
- DHCP request/DHCP ack (between UE and WiFi access network) and MIP registration (between WiFi access network and HA)

Thus, it can be seen that an amount of time is uselessly spent, due to MS detach and MS authentication procedures between UE and WiMAX access network, as illustrated.

The present invention in particular avoids such behaviour to occur.

In an embodiment, the present invention proposes to extend the DHCP option set in a backward-compatible manner in order to improve performance and reliability of seamless handovers between wireless technologies accessed using DHCP and PMIP mechanisms.

In an embodiment, the present invention proposes to extend DHCP protocol (RFC 2131) using a specific option (RFC 2132) in order to achieve fast and reliable seamless handovers in a deterministic and standardized way between wireless networks being accessed using DHCP and PMIP. This applies for example to dual-radio terminals that need to seamless handoff between two wireless technologies (keeping IP connectivity with the same IP address).

In an embodiment, the present invention proposes to add a DHCP option to be carried in DHCP release packet in order to solely inform the DHCP relay whenever the IP address is released in the context of a PMIP handover. The option is set by the terminal when sending the DHCP release packet and is received by the DHCP relay in the access network. If the option is present, the DHCP relay takes appropriate action to avoid the terminal to be subsequently "detached" before relaying the DHCP release packet to the DHCP server. The DHCP server should simply ignore the PMIP handoff option if present.

In order to provide fine grain semantic, the PMIP handoff option to be provided in DHCP release will typically include different actions that can possibly be combined. The proposed actions are currently the followings:
- Detach terminal from access network when IP address released (yes/no)
- De-register terminal from HA when IP address released (yes/no)

Note that "De-register terminal from HA" action can be useful to save spare cycles since a new MIP registration might happen anyway on the "target" (being handoff to) interface. In such a case, the new MIP registration overwrites the old registration anyway. If this behavior is not expected, the action should not be set.

It should be noted that other options could be added, related to mechanisms based on DHCP and PMIP.

The proposed extensions provide a deterministic and standard way of specifying a functional behavior that would be otherwise left to implementation issues.

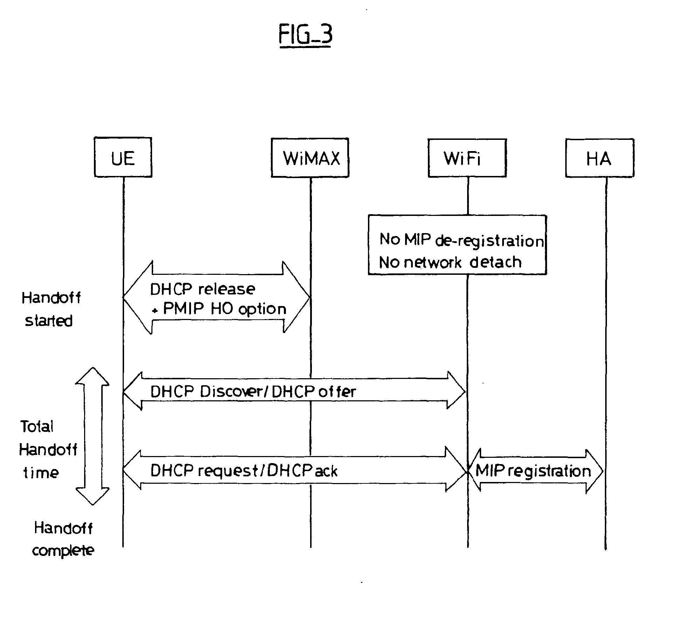

Figure 3 illustrates mobility management according to an embodiment of the present invention, in a system such as for example the one illustrated in figure 1.

Following steps are illustrated in figure 3, at handover from WiMAX access network to WiFi access network for example:
- DHCP release + PMIP HO option (between UE and WiMAX access network)
- DHCP Discover/DHCP offer (between UE and WiFi access network)
- DHCP request/DHCP ack (between UE and WiFi access network) and MIP registration (between WiFi access network and HA).

No network detach is performed between UE and WiMAX access network, and no MIP de-registration is performed between WiMAX access network and HA.

Thus, it can be seen that the amount of time uselessly spent as illustrated in figure 2 is now saved. In other words, handover and mobility management performances are significantly improved.

In an embodiment, there is provided a method for mobility management in a multi-access wireless or mobile communication system supporting IP mobility services, said method comprising the steps of, at handoff of a multi-mode terminal from an access network:
- releasing an IP address allocated to said multi-mode terminal in said access network,
- keeping said multi-mode terminal attached to said access network and/or registered for said IP mobility services, when said IP address is released.

In addition to a method for mobility management (examples of which have been decribed above), the present invention also provides different entities comprising means for performing such method, such as in particular multi mode terminal, and network entities, such as access network entity including DHCP relay and core network entity including DHCP server.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for mobility management in a multi-access wireless or mobile communication system supporting IP mobility services, said method comprising the steps of, at handoff of a multi-mode terminal from an access network:
- releasing an IP address allocated to said multi-mode terminal in said access network,
- keeping said multi-mode terminal attached to said access network and/or registered for said IP mobility services, when said IP address is released.

2. A method according to claim 1, comprising a step of:
- at handoff of said multi-mode terminal from said access network, said multi-mode terminal sending a DHCP Release message containing information indicating that said multi-mode terminal should be kept attached to said access network when said IP address is released.

3. A method according to claim 1 or 2, comprising a step of:
- at handoff of said multi-mode terminal from said access network, said multi-mode terminal sending a DHCP Release message containing information indicating that said multi-mode terminal should be kept registered for said IP mobility services when said IP address is released.

4. A method according to any of claims 1 to 3, comprising a step of:
- upon reception of a DHCP Release message containing information indicating that a multi-mode terminal should be kept attached to said access network when said IP address is released, a DHCP relay in said access network taking appropriate action to keep said multi-mode terminal attached to said access network.

5. A method according to any of claims 1 to 4, comprising a step of:
- upon reception of a DHCP Release message containing information indicating that a multi-mode terminal should be kept registered for said IP mobility services when said IP address is released, a DHCP server in a core network taking appropriate action to keep said multi-mode terminal registered for said IP mobility services.

6. A method according to any of claims 2 to 5, wherein said information is carried in a DHCP Option of said DHCP Release message.

7. A multi mode terminal, comprising means for performing a method according to any of claims 1 to 6.

8. An access network entity, such as in particular access network entity including a DHCP relay, comprising means for performing a method according to any of claims 1 to 6.

9. A core network entity, such as in particular core network entity including DHCP server, comprising means for performing a method according to any of claims 1 to 6.
